# EUROPÄISCHE PATENTSCHRIFT

(11) **EP 2 244 345 B1**
(45) Veröffentlichungstag und Bekanntmachung des Hinweises auf die Patenterteilung: **17.07.2013**
(21) Anmeldenummer: 10003109.5
(22) Anmeldetag: 24.03.2010
(51) Int. Cl.: H02G 3/18, H02G 3/38

(54) **Gehäuse und Verfahren zum Herstellen von Gehäusen**
Housing and method for manufacturing same
Boîtier et procédé de fabrication de boîtiers

(30) Priorität: 22.04.2009 DE 102009019080
(43) Veröffentlichungstag der Anmeldung: 27.10.2010
(73) Patentinhaber: OBO Bettermann GmbH & Co. KG, 58710 Menden (DE)
(72) Erfinder: Raschke, Jörg, 51674 Wiehl (DE); Ruhr, Siegfried, 51674 Wiehl (DE)
(74) Vertreter: Patentanwälte Ruff, Wilhelm, Beier, Dauster & Partner

(56) Entgegenhaltungen:
- GB-A- 102 167

## Beschreibung

Die Erfindung betrifft ein Gehäuse aus wenigstens einem plattenartigen Zuschnitt, insbesondere aus Blech und insbesondere für Elektroinstallationen, mit wenigstens einer mittels einer Ausnehmung in der Gehäusewand gebildeten Aufnahme für einen Gewindebolzen.

Blechgehäuse werden beispielsweise zur Aufnahme elektrotechnischer Installationen verwendet. Ein aus einem plattenartigen, gestanzten Zuschnitt gebildetes Gehäuse für eine Unterflurgerätedose ist aus der europäischen Offenlegungsschrift EP 1 585 377 A2 bekannt. Eine gestanzte Blechplatine wird im Bereich ihrer Seitenwände umgebogen, so dass ein oben offenes, kastenartiges Gehäuse entsteht. Zwei gegenüberliegende Seitenwände weisen an ihren oberen Kanten, die einer Grundplatte gegenüberliegen, rechtwinklig abgebogene Flansche auf, die sich dadurch in Richtung des Innenraums des Gehäuses und parallel zur Grundplatte erstrecken. Im fertig gestellten Zustand des Gehäuses aneinander anliegende Abschnitte der Seitenwände sind mit Ausstanzungen und Ausprägungen versehen, die beim Hochklappen formschlüssig rastend ineinandergreifen und dadurch eine feste Verbindung gewährleisten.

Aus der US-Patentschrift US 7,157,643 B2 ist ein Blechgehäuse bekannt, das mehrere Aufnahmen für Gewindebolzen aufweist. Solche Gewindebolzen dienen beispielsweise zum Festschrauben von Abdeckplatten und Abstützungen. Die Aufnahmen für die Gewindebolzen, beispielsweise Schrauben, sind mittels gebohrter Löcher und in die Löcher eingeschnittener Gewinde realisiert.

Es ist weiter bekannt, bei Unterflurgerätedosen für elektrische Installationen sogenannte Nivellierschrauben vorzusehen, mit denen eine Oberseite der Unterflurgerätedosen auf eine Estrichhöhe ausgerichtet werden kann. Nach Einstellen auf die vorgesehene Estrichhöhe mittels der Nivellierschrauben wird die Unterflurgerätedose dann seitlich mit Estrich umgossen. Aufnahmen für solche Nivellierschrauben sind üblicherweise in Form von speziellen Kunststoffbuchsen oder beispielsweise auch in Form von angeschweißten Muttern vorgesehen.

Mit der Erfindung soll ein Gehäuse aus wenigstens einem plattenartigen Zuschnitt verbessert werden.

Erfindungsgemäß ist hierzu ein Gehäuse aus wenigstens einem plattenartigen Zuschnitt, insbesondere aus Blech und insbesondere für Elektroinstallationen, mit wenigstens einer mittels einer Ausnehmung in der Gehäusewand gebildeten Aufnahme für einen Gewindebolzen vorgesehen, bei dem die Ausnehmung mittels wenigstens zwei aneinander angrenzenden, plattenartigen Gehäusewandabschnitten gebildet ist, wobei eine Berandung der Ausnehmung abschnittsweise durch einen Rand eines ersten Gehäusewandabschnitts und abschnittsweise durch einen Rand eines zweiten Gehäusewandabschnitts gebildet ist.

Durch eine solche Ausbildung eines Gehäuses entsteht eine Ausnehmung und Aufnahme für einen Gewindebolzen automatisch beim Herstellen des Gehäuses, wenn beispielsweise Seitenwände des Gehäuses hoch- und umgebogen werden. Infolgedessen muss für das Herstellen einer Aufnahme für den Gewindebolzen nicht ein separater Bearbeitungsvorgang, beispielsweise das Bohren eines Loches, vorgesehen werden. Die Herstellung des erfindungsgemäßen Gehäuses ist dadurch wesentlich vereinfacht.

In Weiterbildung der Erfindung ist ein Gewindegang der Aufnahme lediglich durch einander gegenüberliegende Teilabschnitte der Berandung der Ausnehmung am ersten und am zweiten Gehäusewandabschnitt gebildet und außerhalb der Teilabschnitte liegende Abschnitte der Berandung der Ausnehmung liegen außerhalb eines Außendurchmessers eines Gewindes der Aufnahme.

Überraschenderweise hat sich herausgestellt, dass eine ausreichende Tragfähigkeit eines Gewindebolzens, insbesondere des Gewindes einer Nivellierschraube, in einer Aufnahme auch dann gegeben ist, wenn ein Gewindegang der Aufnahme lediglich durch einander gegenüberliegende Teilabschnitte der Berandung der Ausnehmung gebildet ist. Dies ermöglicht das Herstellen einer Aufnahme für einen Gewindebolzen durch aneinander anstoßende oder einander überlappende Gehäusewandabschnitte, da der Gewindegang der Aufnahme dann im Wesentlichen horizontal verlaufen kann und keine Notwendigkeit besteht, dem Gewindegang der Aufnahme die Steigung des Gewindes zu verleihen. Trotz dem beispielsweise ebene Gehäusewandabschnitte die Aufnahme für den Gewindebolzen bilden, kann dieser in die gegenüberliegenden Teilabschnitte der Berandung der Ausnehmung, die durch die ebenen Gehäusewandabschnitte gebildet ist, eingreifen, wenn außerhalb dieser als Gewinde dienenden Teilabschnitte liegende Teilabschnitte der Berandung der Ausnehmung außerhalb eines Außendurchmessers eines Gewindes der Aufnahme liegen. Darüber hinaus können die Gehäusewandabschnitte, die die Ausnehmung bilden, eben ausgebildet und senkrecht zu einer Mittellängsachse des Gewindebolzens angeordnet sein. Da der Gewindebolzen lediglich an Teilabschnitten der Berandung der Ausnehmung angreift, kann er trotz der ebenen und senkrecht zu seiner Mittellängsachse angeordneten Gehäusewandabschnitte problemlos in die durch die Ausnehmung gebildete Aufnahme eingeschraubt und darin sicher gehalten werden.

In Weiterbildung der Erfindung sind die einander gegenüberliegenden Teilabschnitte jeweils etwa viertelkreisförmig ausgebildet.

Mittels zweier gegenüberliegender viertelkreisförmiger Teilabschnitte kann eine ausreichende Führung für einen Gewindebolzen bereitgestellt werden und die dadurch gebildeten, einander gegenüberliegenden, jeweils viertelkreisförmigen Gewindegänge sind gemeinsam auch ausreichend tragfähig.

In Weiterbildung der Erfindung ist zwischen den gegenüberliegenden Teilabschnitten ein Höhenversatz von wenigstens der halben Gewindesteigung vorgesehen.

Auf diese Weise lässt sich eine sichere Führung des Gewindebolzens senkrecht zur Gehäusewand erzielen. Beispielsweise wird eine Materialstärke von zwei einander überlappenden Gehäusewandabschnitten so gewählt bzw. eine Gewindesteigung des Gewindebolzens so angepasst, dass die Materialstärke der Gehäusewandabschnitte der halben Gewindesteigung entspricht. Alternativ wird ein Zwischenraum zwischen den Gehäusewandabschnitten so gewählt, dass der gewünschte Höhenversatz zwischen den Teilabschnitten gegeben ist.

In Weiterbildung der Erfindung überlappen sich der erste und der zweite Gehäusewandabschnitt angrenzend an die Ausnehmung teilweise.

Auf diese Weise wird eine sehr stabile Aufnahme für einen Gewindebolzen geschaffen und auch ein Höhenversatz zwischen den gegenüberliegenden Teilabschnitten der Berandung der Ausnehmung lässt sich zuverlässig und in einfacher Weise einstellen. Die überlappenden Gehäusewandabschnitte können, müssen sich aber nicht unbedingt berühren.

In Weiterbildung der Erfindung weist der Gewindebolzen einen Gewindegang mit sägezahnartigem Querschnitt auf, wobei im Querschnitt durch den Bereich gesehen, in dem der Gewindebolzen sich auf dem Rand der Ausnehmung abstützt, eine auf dem Rand aufliegende Flanke des Gewindegangs etwa parallel zu einer Oberfläche der Gehäusewandabschnitte angrenzend an die Ausnehmung angeordnet ist.

Mit solchen Gewinden mit sägezahnartigem Querschnitt lässt sich zusammen mit der erfindungsgemäßen Ausbildung der Aufnahme für den Gewindebolzen eine sehr hohe Tragkraft und sichere Führung des Gewindebolzens in der Aufnahme erreichen. Solche Gewindebolzen können an Gehäuse für Unterflurgerätedosen beispielsweise als Nivellierschrauben eingesetzt werden, um eine Oberseite des Gehäuses auf die Höhe eines vorgesehenen Estrichs einzustellen.

In Weiterbildung der Erfindung weist das Gehäuse wenigstens zwei Seitenwände und von den Seitenwänden senkrecht abragende Flansche auf, wobei die Ausnehmung in einem Eckbereich vorgesehen ist, in dem zwei Flansche aneinander angrenzen.

Die zwei aneinander angrenzenden Flansche gelangen durch das Hochbiegen der jeweiligen Seitenwand in ihre endgültige Position im Eckbereich. Indem jeder Flansch im Eckbereich eine Ausnehmung aufweist, kann dadurch mittels einfachem Hochbiegen der Seitenwände die Aufnahme für den Gewindebolzen zwischen den aneinander angrenzenden Flanschen geschaffen werden. Die Flansche können dabei stumpf aneinander stoßen oder sich auch im Randbereich überlappen.

In Weiterbildung der Erfindung weist das Gehäuse eine rechteckige Grundform mit einer Grundplatte und vier Seitenwänden auf, wobei jede Seitenwand gegenüberliegend der Grundplatte jeweils einen parallel zur Grundplatte abragenden Flanschabschnitt aufweist und wobei in den vier Eckbereichen zwischen den Flanschabschnitten jeweils eine Ausnehmung zur Bildung einer Aufnahme für einen Gewindebolzen gebildet ist.

Beispielsweise ragen die Flansche nach innen, in die Öffnung des Gehäuses vor. Alternativ können die Flansche auch von der Gehäuseöffnung aus nach außen vorragen. In beiden Fällen können die zwischen aneinander angrenzenden Flanschen gebildeten Aufnahmen dazu verwendet werden, eine Nivellierschraube einzudrehen.

In Weiterbildung der Erfindung ist das Gehäuse aus einem einstückigen, gebogenen Blechplatinenzuschnitt gebildet.

Auf diese Weise lässt sich das erfindungsgemäße Gehäuse schnell und kostengünstig herstellen. Beispielsweise sind zumindest in einem Eckbereich des Gehäuses Rastverbindungsmittel vorgesehen, die eine dauerhafte Verrastung der aneinander anliegenden Gehäusewandabschnitte bewirken. Mittels solcher formschlüssiger Rastmittel kann das Gehäuse zum einen ohne zusätzliche Schweißarbeiten hergestellt werden und es ist dann nicht zu befürchten, dass auch bei starker Belastung des Gehäuses die Seitenwände ihre relative Lage zueinander verändern. Dies gibt aber gleichzeitig die Möglichkeit, eine hochbelastbare Aufnahme für einen Gewindebolzen zwischen zwei aneinander angrenzenden Gehäusewandabschnitten zu schaffen. Denn die Rastverbindungsmittel zwischen den Gehäusewandabschnitten sorgen dafür, dass sich die Teilabschnitte der Berandung der Ausnehmung, die die Gewindegänge für den Gewindebolzen bilden, auch bei hoher Belastung nicht oder lediglich unwesentlich auseinander bewegen.

Das der Erfindung zugrundeliegende Problem wird auch durch ein Gehäuse gelöst, bei dem in wenigstens einer Seitenwand wenigstens ein entfernbarer Bereich zum wahlweisen Herstellen einer Kabeleinführungsöffnung vorgesehen ist, wobei wenigstens ein Steg das Seitenwandmaterial und das Materialstück des entfernbaren Bereichs verbindet, bei dem eine den entfernbaren Bereich umgebende Kontur im Seitenwandmaterial wenigstens eine sich von dem entfernbaren Bereich weg erstreckende Ausbuchtung aufweist, in der der Steg wenigstens abschnittsweise angeordnet ist.

Der Steg kann bei einer solchen Ausbildung mit dem Seitenwandmaterial an einem dem entfernbaren Bereich abgewandten Ende der Ausbuchtung verbunden sein. Dadurch ist es möglich, den Steg innerhalb der Ausbuchtung abzuzwicken, abzuschneiden oder abzudrehen, so dass die Schnittkante in der Ausbuchtung liegt und nicht mehr in eine Grundform des entfernbaren Bereiches vorragt. Dadurch kann ein Leerrohr, dessen Außendurchmesser annähernd dem Durchmesser der Grundform des entfernbaren Bereiches entspricht, problemlos in die geschaffene Durchgangsöffnung eingeführt werden. Dies wäre nicht der Fall, wenn die Reste des Stegs in die Grundform vorragen würden. Gerade bei Blechgehäusen kann dadurch auch eine beim Stand der Technik latente Verletzungsgefahr durch in die geschaffene Durchangsöffnung vorragende, scharfkantige Reste des Stegs verhindert werden. Die Kontur im Seitenwandmaterial ist beispielsweise ausgeschnitten, vorgestanzt oder mit einer geringeren Wandstärke versehen, so dass der entfernbare Bereich in sehr einfacher Weise und ohne Werkzeug bzw. lediglich durch Zuhilfenahme von Handwerkzeug entfernt werden kann.

In Weiterbildung der Erfindung verläuft eine den entfernbaren Bereich umgebende Kontur domartig.

Ausgehend von einer Kante zwischen einer Grundplatte des Gehäuses und einer Seitenwand verläuft die Kontur beispielsweise zunächst senkrecht zu der Kante, verläuft dann am oberen Ende abgerundet und geht in die Ausbuchtung über, wobei die Ausbuchtung mittig im oberen Bereich der Kontur angeordnet ist. Insgesamt ergibt sich dadurch einschließlich der Ausbuchtung eine domartige Form, wobei die Ausbuchtung die Spitze der domartigen Form bildet. Ein solcher Verlauf der Kontur ermöglicht es, den Steg in der Ausbuchtung, die die Spitze der domartigen Form bildet, anzuordnen und dadurch sicherzustellen, dass die Reste des noch am Seitenwandmaterial verbleibenden, abgezwickten Stegs nicht den Bereich der Ausnehmung vorragen, in ein Benutzer hineinlangen muss, um beispielsweise Leitungen oder Leerrohre einzufügen.

In Weiterbildung der Erfindung sind eine Begrenzung der Ausbuchtung und der darin angeordnete Steg so voneinander beabstandet, um den Steg mit einem Seitenschneider oder dergleichen durchtrennen zu können.

Auf diese Weise kann der Steg in sehr einfacher und komfortabler Weise durchtrennt werden. Dass mit dem Seitenschneider eine scharfe Kante an dem an der Seitenwand verbleibenden Rest des Steges geschaffen wird, ist unproblematisch, da dieser scharfkantige Rest des Steges nicht über die Ausbuchtung hinausragt.

In Weiterbildung der Erfindung ist ein zweiter, entfernbarer Bereich einschließlich einer Ausbuchtung der umgebenden Kontur zur Anordnung eines Stegs innerhalb eines ersten, größeren entfernbaren Bereichs angeordnet.

Auf diese Weise hat ein Anwender die Wahl, eine größere oder kleinere Ausnehmung zum Einführen von Leerrohren oder Kabeln in der Seitenwand zu schaffen.

In Weiterbildung der Erfindung sind im Seitenwandabschnitt unmittelbar angrenzend an die den entfernbaren Bereich umgebende Kontur aus einer Ebene des Seitenwandmaterials ausgestellte Laschen vorgesehen.

Mittels solcher Laschen wird ein stabiles Widerlager für sogenannte Rillenschläuche geschaffen, die üblicherweise bei Elektroinstallationen als Leerrohre verwendet werden. Die Breite der Rillen an solchen Rillenschläuchen beträgt dabei mehrere Millimeter und ist damit deutlich größer als die üblicherweise für Gehäuse von Unterflurgerätedosen verwendeten Materialstärken. Das Vorsehen ausgestellter Laschen kann hier auf einfache Weise Abhilfe schaffen. Ein Rillenschlauch kann durch die Laschen sicher an der Ausnehmung befestigt werden und ein Verkippen des Rillenschlauchs in der Ausnehmung wird zuverlässig verhindert. Dadurch kann auch beim nachfolgenden Umgießen mit Estrich verhindert werden, dass größere Mengen Estrich in den Innenraum der Unterflurgerätedose eindringen.

Das der Erfindung zugrundeliegende Problem wird auch durch ein Verfahren zum Herstellen von Gehäusen, insbesondere für Elektroinstallationen, gelöst, bei dem zunächst flache Zuschnitte in Form von Platinen, insbesondere aus Blech, hergestellt werden und abschnittsweise um Kanten zu Seitenwänden und/oder Flanschen hochgeklappt und zur Gehäuseendform gebracht werden, wobei mindestens zwei Seitenwände und/oder Flansche am jeweiligen Rand in Gegenüberlage gebracht oder wenigstens abschnittsweise überlappt werden, bei dem zwischen den Rändern eine Ausnehmung zur Bildung einer Aufnahme für einen Gewindebolzen hergestellt wird.

Durch das erfindungsgemäße Verfahren kann beim Herstellen des Gehäuses selbst dadurch in sehr einfacher Weise eine Aufnahme für einen Gewindebolzen hergestellt werden. Speziell sind zum Herstellen der Aufnahme für den Gewindebolzen keine separaten Arbeitsvorgänge erforderlich, wie beispielsweise Bohren von Löchern oder Verformen des Randes einer Ausnehmung zu einem Gewindegang. Beim Herstellen der Gegenüberlage oder beim Überlappen der Seitenwände und/oder Flansche wird automatisch ein Höhenversatz zwischen den gegenüberliegenden, die Ausnehmung begrenzenden Rändern hergestellt, der wenigstens der Materialstärke der Platine entspricht. Dieser Höhenversatz entspricht dann vorteilhafter Weise der halben Gewindesteigung. Die Platine kann in den Abschnitten, welche Eckbereiche zwischen den Seitenwänden bilden, mit Ausstanzungen und Ausprägungen versehen werden, die beim Hochklappen formschlüssig rastend ineinandergreifen und eine feste Verbindung zwischen den Seitenwänden gewährleisten. In diesem Fall verriegelt das Hochklappen der Seitenwände die Seitenwände aneinander und schafft gleichzeitig eine sehr stabile Aufnahme für einen Gewindebolzen.

Vorteilhafterweise sind an dem Gehäuse vier Seitenwände mit jeweils einem Flansch versehen, der dann beim fertig gestellten Gehäuse parallel zur Grundplatte angeordnet ist. An den seitlichen Enden der jeweiligen Flansche werden jeweils Ausnehmungen vorgesehen, die dann im hochgeklappten und fertig gestellten Zustand des Gehäuses an jeder Ecke eine Aufnahme für jeweils ein Gewindebolzen bilden. Die dort eingesetzten Gewindebolzen dienen dann als Nivellierschrauben für eine Höheneinstellung eines auf das Gehäuse aufgesetzten Oberteils.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Ansicht eines erfindungsgemäßen Gehäuses von schräg oben,
- Fig. 2: eine Draufsicht auf das Gehäuse der Fig. 1,
- Fig. 3: eine Seitenansicht des Gehäuses der Fig. 1,
- Fig. 4: eine vergrößerte Darstellung der Einzelheit IV aus Fig. 2,
- Fig. 5: eine abschnittsweise Darstellung einer Blechplatine zur Herstellung des Gehäuses der Fig. 1,
- Fig. 6: eine Draufsicht auf eine Unterflurgerätedose für Elektroinstallationen mit dem Gehäuse der Fig. 1,
- Fig. 7: eine Draufsicht auf die Schnittebene VII-VII in Fig. 6, wobei der Gewindebolzen nicht geschnitten dargestellt ist,
- Fig. 8: eine vergrößerte Darstellung der Einzelheit VIII aus Fig. 7,
- Fig. 9: eine Ansicht des Gehäuses aus Fig. 1 von schräg oben unter anderem Winkel und vergrößert,
- Fig. 10: eine vergrößerte Darstellung der Einzelheit X aus Fig. 9,
- Fig. 11: eine vergrößerte Darstellung der Einzelheit XI aus Fig. 9,
- Fig. 12: eine vergrößerte Darstellung der Einzelheit XII aus Fig. 9,
- Fig. 13: die Unterflurgerätedose der Fig. 6 von schräg oben vor dem Eindrehen einer Nivellierschraube,
- Fig. 14: eine vergrößerte Darstellung der Einzelheit XIV aus Fig. 13,
- Fig. 15: die Unterflurgerätedose der Fig. 6 von schräg oben nach dem Eindrehen einer Nivellierschraube und
- Fig. 16: die Einzelheit XVI aus Fig. 15.

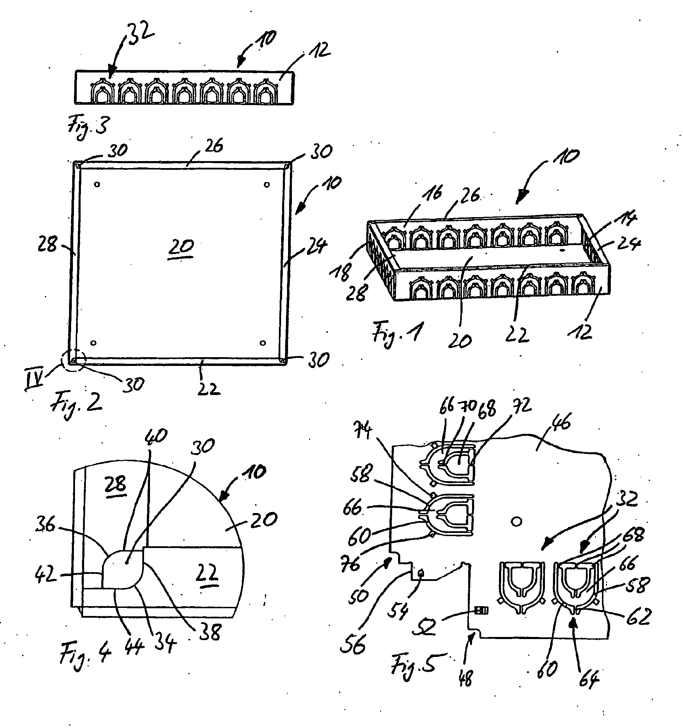

Die Darstellung der Fig. 1 zeigt ein erfindungsgemäßes Gehäuse 10, das aus einem einstückigen Blechzuschnitt hergestellt ist. Das Gehäuse 10 weist insgesamt vier Seitenwandabschnitte 12, 14, 16, 18 auf, die jeweils senkrecht zu einer Grundplatte 20 angeordnet sind. Jede der Seitenwände 12, 14, 16, 18 ist an ihrem oberen, der Grundplatte 20 abgewandten Ende mit einem rechtwinklig abgebogenen Flansch 22, 24, 26, 28 versehen. Die Flansche 22, 24, 26, 28 erstrecken sich in Richtung eines Innenraums des Gehäuses 10 und sind parallel zur Grundplatte 20 angeordnet. Da sich die Flansche 22, 24, 26, 28 in Richtung auf den Innenraum des Gehäuses 10 zu erstrecken, sind sie oberhalb der Grundplatte 20 angeordnet. An den vier Ecken des Gehäuses grenzen die Flansche 22, 24, 26, 28 aneinander an und bilden, wie in Fig. 2 zu erkennen ist, jeweils eine Ausnehmung 30 zum Aufnehmen eines Gewindebolzens.

Die Darstellung der Fig. 3 zeigt das Gehäuse 10 in einer Seitenansicht. Zu erkennen ist, dass in der Seitenwand 12 insgesamt sieben entfernbare Bereiche 32 aufweist, die identisch ausgebildet sind. Innerhalb jedes entfernbaren Bereichs 32 ist ein weiterer, kleinerer entfernbarer Bereich vorgesehen, um wahlweise große oder kleine Einführungsöffnungen bereitstellen zu können. Eine detaillierte Erläuterung dieser entfernbaren Bereiche wird nachstehend gegeben.

Die Darstellung der Fig. 4 zeigt vergrößert die Einzelheit IV aus Fig. 2. Zu erkennen ist, dass die Flansche 22 und 28 in der Ecke des Gehäuses 10 rechtwinklig aufeinander stoßen und sich im Eckbereich abschnittsweise überlappen. Speziell ist der Flansch 22 abschnittsweise oberhalb des Flansches 28 angeordnet. Sowohl der Flansch 22 als auch der Flansch 28 sind an ihrer Ecke mit einer Ausnehmung versehen, die in Form einer einspringenden, abgerundeten Ecke ausgeführt ist. Ein Rand der jeweiligen Ausnehmung in dem Flansch 22 und dem Flansch 28 verläuft dadurch zunächst geradlinig von einer Vorderkante des jeweiligen Flansches 22, 28, geht dann tangential in einen Viertelkreis über, der dann tangential wieder von einer geraden Linie fortgesetzt wird, die senkrecht auf eine Seitenkante des jeweiligen Flansches 22, 28 stößt. Die beiden Ausnehmungen in den Flanschen 22, 28 sind so bemessen und angeordnet, dass im fertig gestellten Zustand des Gehäuses 10, wie er in Fig. 4 dargestellt ist, die Ausnehmung 30 gebildet ist. Die Ausnehmung 30 weist die Form eines Quadrats mit zwei diagonal gegenüberliegenden abgerundeten Ecken auf. Berandet wird die Ausnehmung 30 von den Rändern der Ausnehmungen in den Flanschen 22, 28.

Die Berandung der Ausnehmung 30 weist somit zwei gegenüberliegende Teilabschnitte 34, 36 auf, die jeweils viertelkreisförmig sind. Weiter weist die Berandung der Ausnehmung 30 geradlinige Teilabschnitte 38, 40, 42 und 44 auf. Die geradlinigen Teilabschnitte 38, 44 der Berandung der Ausnehmung 30 schließen sich an gegenüberliegende Enden des viertelkreisförmigen Teilabschnitts 34 an. Die geradlinigen Teilabschnitte 40, 42 der Berandung der Ausnehmung 30 schließen sich an gegenüberliegende Enden der des viertelkreisförmigen Teilabschnitts 36 an. Die geradlinigen Teilabschnitte 38, 40 sind senkrecht zueinander angeordnet und bilden eine rechtwinklige Ecke. Gegenüberliegend dieser Ecke sind die geradlinigen Teilabschnitte 42, 44 angeordnet und bilden ebenfalls eine rechtwinklige Ecke der Ausnehmung 30.

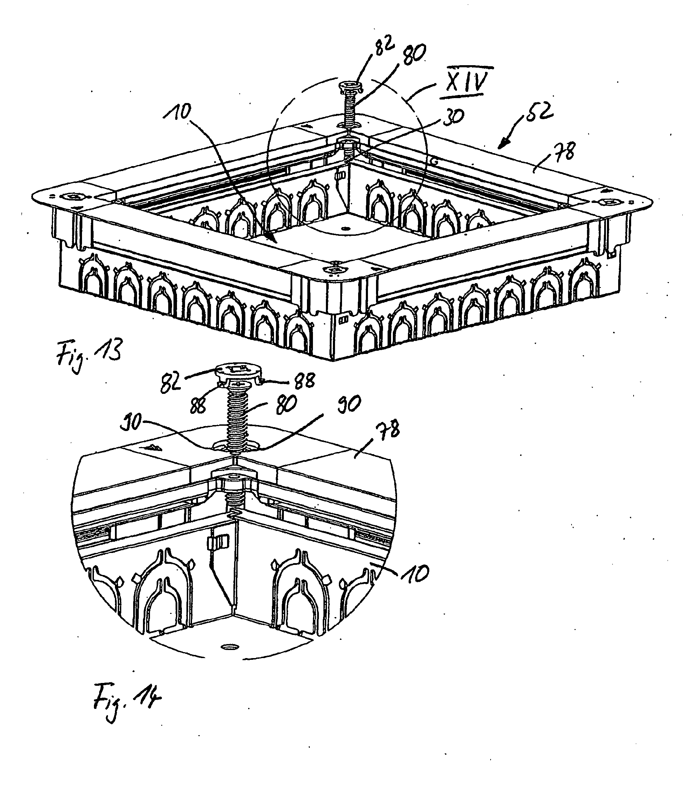

Die Ausnehmung 30 bildet eine Aufnahme für einen nicht dargestellten Gewindebolzen, der aber beispielsweise in Fig. 13 und Fig. 14 zu erkennen ist. Ein Gewindegang der Ausnehmung wird durch die einander gegenüberliegenden, viertelkreisförmigen Teilabschnitte 34, 36 der Berandung der Ausnehmung 30 gebildet. Die geradlinigen Teilabschnitte 38, 40, 42, 44 der Berandung der Ausnehmung 30 liegen dann vollständig oder wenigstens größtenteils außerhalb eines Außendurchmessers eines Gewindes des Gewindebolzens und damit auch außerhalb des Außendurchmessers eines Gewindes der Aufnahme im Gehäuse 10, die durch die Ausnehmung 30 gebildet ist. Mit anderen Worten trägt das Gewinde eines in die Ausnehmung 30 eingeschraubten Gewindebolzens lediglich in den Bereichen radial außerhalb der viertelkreisförmigen Teilabschnitte 34, 36. Die geradlinigen Teilabschnitte 38, 40, 42, 44 werden dahingegen von dem Gewinde des Gewindebolzens nicht oder lediglich in einem sehr kurzen Teilbereich berührt.

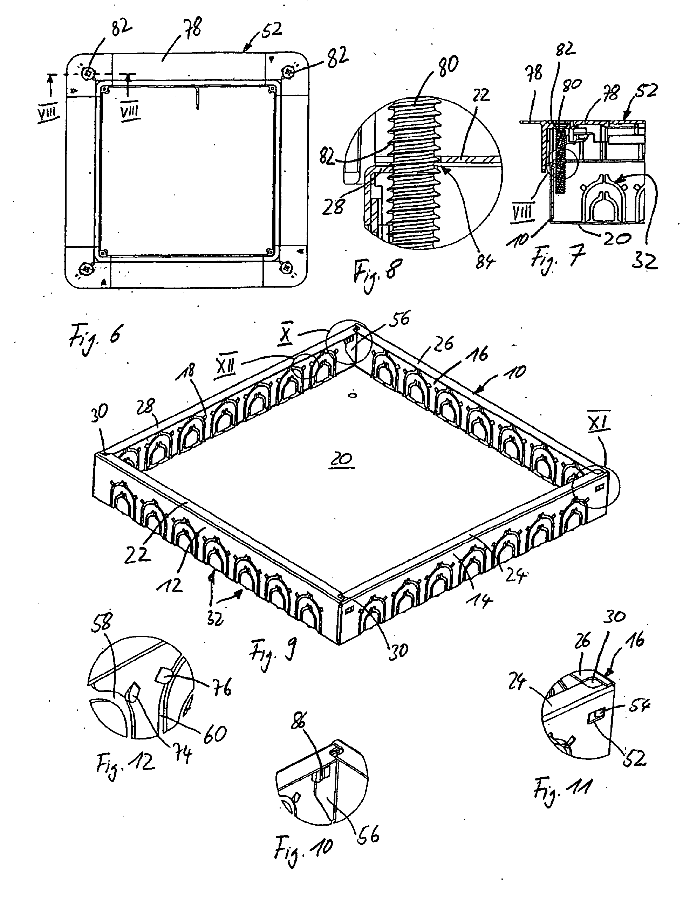

Darüber hinaus besteht zwischen den viertelkreisförmigen Teilabschnitten 34, 36 ein Höhenversatz entsprechend der halben Gewindesteigung. Die Materialstärke bzw. die Steigung des Gewindes des Gewindebolzens kann so gewählt sein, dass die Materialstärke der halben Gewindesteigung entspricht. Bei der dargestellten Ausführungsform ist die Materialstärke kleiner als die halbe Gewindesteigung und zwischen den Flanschen liegt in Höhenrichtung gesehen ein Zwischenraum, siehe auch Fig. 8. Auch ohne dass die Teilabschnitte 34, 36 der Berandung der Ausnehmung 30 gegeneinander verschränkt sind, kann dadurch ein Gewindebolzen mit seinem Gewinde an den Teilabschnitten 34, 36 angreifen und in einer Lage eingeschraubt werden, die senkrecht zur Zeichenebene der Fig. 4 und somit senkrecht zur Grundplatte 20 liegt. Der Höhenversatz zwischen den Teilabschnitten 34, 36 wird in einfacher Weise dadurch hergestellt, dass der Flansch 22 den Flansch 28 teilweise überlappt und in geringem Abstand über diesen angeordnet ist.

Es ist gut zu erkennen, dass die Ausnehmung 30, die dann am fertig gestellten Gehäuse eine Aufnahme für einen Gewindebolzen bereitstellt, in sehr einfacher Weise hergestellt werden kann und automatisch beim Hochklappen der Seitenwände mit den bereits abgebogenen Flanschen 22, 28 entsteht.

In der Darstellung der Fig. 5 ist abschnittsweise eine Blechplatine 46 vor dem Abbiegen der Flansche und dem Hochklappen der Seitenwände dargestellt. Gut zu erkennen sind die einspringenden Ecken 48, 50, die dann im fertig gestellten Zustand die Berandung der Ausnehmung 30 bilden. Die Blechplatine 46 weist in dem dargestellten Eckbereich weiter eine Ausstanzung 52 und eine Ausprägung 54 auf. Die Ausprägung 54 befindet sich dabei an einer Lasche 56, die vor dem Hochklappen der zugeordneten Seitenwand rechtwinklig zu dieser abgebogen wird. Im fertig gestellten Zustand rastet dann die Ausprägung 54 in die Ausstanzung 52 ein und wird in dieser Lage dann mittels einer Federzunge gehalten, die in der Darstellung der Fig. 5 in der Ausstanzung 52 zu erkennen ist und durch das Herstellen der Ausstanzung 52 gebildet wird. Eine detaillierte Erläuterung dieser formschlüssig rastend ineinander greifenden Ausstanzung 52 mit der Federzunge und der Ausprägung 54 wird noch anhand der Darstellung der Fig. 9, 10 und 11 gegeben.

Weiter sind in der Darstellung der Fig. 5 insgesamt vier entfernbare Bereiche 32 in den Bereichen der Platine 46 zu erkennen, die später zwei rechtwinklig zueinander stehende Seitenwände bilden. Jeder dieser entfernbaren Bereiche 32 ist durch zwei spiegelsymmetrisch angeordnete Ausnehmungen 58, 60 definiert, die beispielsweise aus der Blechplatine 46 mit einem Laser ausgeschnitten werden und die insgesamt eine domartige Kontur ergeben, die den entfernbaren Bereich 32 umgibt. Speziell geht die langgestreckte Ausnehmung 58 von einer gedachten Kante zwischen einer Seitenwand und einer Grundplatte der Blechplatine 46 aus, verläuft dann zunächst senkrecht zu dieser gedachten Kante, um dann abgerundet weiter zu verlaufen. Als abgerundeter Bereich schließt sich ein Viertelkreis an, und die Ausnehmung endet an einem Steg 62, der die Ausnehmung 58 von der spiegelbildlich ausgeführten Ausnehmung 60 trennt. Die Ausnehmungen 58, 60 ergeben insgesamt eine domartige Kontur, die beispielsweise auch als U-förmig bezeichnet werden kann. Im Unterschied zu einer strengen U-Form weist die Kontur aber eine Spitze auf, die mittels einer Ausbuchtung 64 gebildet ist. In dieser Ausbuchtung 64 ist der Steg 62 angeordnet. Der Steg 62 verbindet das Material der Seitenwand mit dem Materialstück 66 des entfernbaren Bereichs 32. Weiter ist das Materialstück 66 des entfernbaren Bereichs 32 nur noch über drei Stege 68 im Bereich der gedachten Kante zwischen Seitenwand und Grundplatte mit der Grundplatte verbunden. Die Ausbuchtung 64 schafft nun ausreichend Raum, um den Steg 62 so zu durchtrennen, dass der am Seitenwandmaterial verbleibende abgetrennte Rest des Steges 62 nicht in die nach Herausnehmen des Materialstücks 66 des entfernbaren Bereichs 32 geschaffene U-förmige Ausnehmung hineinragt. Dadurch wird sichergestellt, dass ein Leerrohr mit annähernd dem gleichen Durchmesser wie die entstandene Ausnehmung problemlos eingeführt werden kann und dass ein Bediener mit einem Finger in die entstehende U-förmige Ausnehmung hineinlangen kann, ohne Gefahr zu laufen, sich an dem verbleibenden Ende des Steges 62 zu verletzen. Nach dem Durchtrennen des Steges 62 wird das Materialstück 66 mehrere Male auf und ab gebogen, bis die Stege 68 brechen.

Wie in der Darstellung der Fig. 5 weiter zu erkennen ist, ist in dem Materialstück 66 ein weiteres entfernbares Materialstück 68 vorgesehen, das ebenfalls von zwei langgestreckten Ausnehmungen eingegrenzt wird, die insgesamt eine domartige Form einnehmen. Wenn in der Seitenwand des Gehäuses lediglich eine kleine Öffnung zum Einführen von Kabeln oder Leerrohren geschaffen werden soll, wird somit lediglich ein Steg 70 durchtrennt, der das entfernbare Materialstück 68 mit dem entfernbaren Materialstück 66 verbindet. Das Materialstück 68 kann dann nach Durchtrennen des Weiteren Steges 72, der das Materialstück 68 mit dem Material der Grundplatte verbindet, entnommen werden. Auch hier besteht wieder der Vorteil, dass der Steg 70 so abgetrennt werden kann, dass der verbleibende, üblicherweise scharfkantige Rest des Steges 70 nicht in die geschaffene U-förmige Ausnehmung hineinragt.

Unmittelbar angrenzend an die Ausnehmungen 58, 60 sind bei jedem der entfernbaren Bereiche 32 ausgestellte Laschen 74, 76 vorgesehen. Die ausgestellte Lasche 74 grenzt an dem viertelkreisförmigen Abschnitt der langgestreckten Ausnehmung 58 an und die ausgestellte Lasche 76 grenzt an den viertelkreisförmigen Abschnitt der langgestreckten Ausnehmung 60 an. Beide Laschen 74, 76 sind in Richtung auf den Innenraum des Gehäuses 10 ausgestellt, siehe auch Fig. 12. Die Laschen 74, 76 sind dafür vorgesehen, einen sogenannten Rillenschlauch, der üblicherweise als Leerrohr verwendet wird, sicher in der nach Entfernen des Bereichs 66 entstehenden U-förmigen Ausnehmung zu halten. Denn die Breite der Rillen solcher Rillenschläuche ist üblicherweise größer als die Materialstärke der Blechplatine 46. Die Laschen 74, 76 sind nun so weit ausgestellt, dass der Rillenschlauch jedenfalls im Bereich der ausgestellten Laschen 74, 76 sicher gehalten wird.

Die Darstellung der Fig. 6 zeigt eine Unterflurgerätedose 52 in einer Draufsicht, wobei die Unterflurgerätedose 52 mit dem Gehäuse 10 gemäß Fig. 1 versehen ist, das in der Darstellung der Fig. 6 aber nicht zu erkennen ist, da es unterhalb eines Oberteils 78 der Unterflurgerätedose 52 angeordnet ist.

Anhand der Darstellung der Fig. 7, entsprechend einer Ansicht der Schnittebene VII-VII aus Fig. 6, wobei aber eine Nivellierschraube 80 nicht geschnitten dargestellt ist, ist der Aufbau der Unterflurgerätedose 52 zu erkennen. Die Unterflurgerätedose 52 weist das Blechgehäuse 10 auf, das mit seiner Grundplatte 20 auf einen Rohboden eines Gebäudes aufgesetzt wird. Das Oberteil 78 ist mit dem Gehäuse 10 über die Nivellierschrauben 80 verbunden. An jeder Ecke des Gehäuses 10 ist eine Nivellierschraube 80 vorgesehen, die in eine jeweilige Ausnehmung 30 im Gehäuse 10 eingreift, siehe Fig. 2. Durch Drehen der Nivellierschrauben 80 kann somit ein Abstand des Oberteils 78 von der Grundplatte 20 und somit dem Rohboden des Gebäudes verstellt werden. Eine Oberseite des Oberteils 78 wird mittels der Nivellierschrauben 80 so eingestellt, dass sie mit der Oberseite eines einzubringenden Estrichs fluchtet. Nachdem dann auf dem Rohboden beispielsweise Leerrohre verlegt wurden, die nach Entfernen der Bereiche 32 in die dann entstandenen Ausnehmungen in das Gehäuse 10 eingeführt werden, wird die Unterflurgerätedose 52 mit Estrich umgossen. Nach Aushärten des Estrichs können dann Anschlussgeräte in den Innenraum der Unterflurgerätedose 52 eingesetzt werden.

Die Nivellierschraube 80 besteht aus einem Gewindebolzen mit sägezahnartigem Gewinde und einem kegelstumpfförmigen Kopf. Der kegelstumpfförmige Kopf stützt sich von unten her an einem herausnehmbaren Deckel 82 ab. Wenn der Deckel 82 vom Oberteil 78 entfernt wird, kann das Oberteil 78 somit entlang dem Gewinde der Nivellierschraube 80 nach unten rutschen. Der Deckel 82 ist mit einer zentralen Öffnung versehen, um bei eingesetztem Deckel 82 einen Kreuzschlitz im Kopf der Nivellierschraube 80 zu erreichen und dadurch einen Abstand des Oberteils 78 zum Gehäuse 10 einstellen zu können.

Durch Vorsehen der herausnehmbaren Deckel 82, die mittels eines Bajonettverschlusses am Oberteil 78 verrastet werden, ist es möglich, nach dem Umgießen der Unterflurgerätedose 52 mit Estrich das Oberteil 78 vom Gehäuse 10 zu entkoppeln. Dies kann gewünscht sein, um Materialausdehnungen im Estrich ausgleichen zu können. Beispielsweise kann sich eine Höhe des Estrichs bei starker Erwärmung verändern. Wenn das Oberteil 78 dann starr mit dem Gehäuse 10 und damit dem Rohboden des Gehäuses 10 verbunden ist, kann dies zu Rissen im Estrich führen. Nach Entfernen der Deckel 82 kann das Oberteil 78 bei einer Ausdehnung des Estrichs eine beschränkte Relativbewegung zum Gehäuse 10 ausführen, so dass Risse im Estrich vermieden werden.

Die Darstellung der Fig. 8 zeigt die Einzelheit VIII der Fig. 7 vergrößert. Es ist gut zu erkennen, dass der Gewindebolzenabschnitt der Nivellierschraube 80 ein sägezahnartiges Gewinde aufweist, wobei eine in der Darstellung der Fig. 8 nach unten gerichtete Flanke 82 des Gewindegangs annähern horizontal verläuft. Mit dieser Flanke 82 stützt sich die Nivellierschraube 80 auf den Flanschen 22 bzw. 28 ab, deren Oberseite ebenfalls horizontal und damit annähernd parallel zur Flanke 82 des Gewindes der Nivellierschraube 80 angeordnet ist.

In der Darstellung der Fig. 8 ist weiter zu erkennen, dass sich die Flansche 22, 28 zwar überlappen, dass die Unterseite des Flansches 28 jedoch nicht auf der Oberseite des Flansches 22 aufliegt. Vielmehr ist ein geringer Abstand 84 zwischen der Unterseite des Flansches 22 und der Oberseite des Flansches 28 zu erkennen. Dieser Abstand 84 ist so auf die Gewindesteigung der Nivellierschraube 80 und die Materialstärke der Flansche 22, 28 abgestimmt, dass die Nivellierschraube 80 sowohl am Flansch 22 als auch am Flansch 28 angreifen kann und außerdem exakt senkrecht zu den Flanschen 22 und 28 in der durch diese beiden Flansche 22, 28 gebildeten Ausnehmung angeordnet ist.

Anhand der Darstellung der Fig. 4 war die Ausnehmung 30 erläutert worden, in die nun gemäß Fig. 8 die Nivellierschraube 80 eingesetzt ist. Die viertelkreisförmigen Teilabschnitte 34, 36, die in den Gewindegang der Nivellierschraube 80 eingreifen, sind in der Darstellung der Fig. 8 aufgrund der Lage der Schnittebene VII-VII nur abschnittsweise zu erkennen. Speziell liegt der viertelkreisförmige Teilabschnitt 36 am Flansch 28 unmittelbar hinter der Schnittebene VII-VII in Fig. 8 also hinter der Zeichenebene und der viertelkreisförmige Teilabschnitt 34 am Flansch 22 liegt unmittelbar vor der Schnittebene VIII-VII in der Fig 8 also vor der Zeichenebene auf der Seite des Betrachtenden. Es ist aber dennoch zu erkennen, dass ein Höhenversatz der Oberseiten der Flansche 22, 28 der halben Gewindesteigung der Nivellierschraube 80 entspricht, und dass die außerhalb der viertelkreisförmigen Teilabschnitte 34, 36 liegenden geradlinigen Teilabschnitte 38, 40, 42, 44, siehe Fig. 4, außerhalb eines Außendurchmessers des Gewindes der Nivellierschraube 80 angeordnet sind. Die Nivellierschraube 80 greift somit lediglich im Bereich der viertelkreisförmigen Teilabschnitte 34, 36 an den Flanschen 22, 28 an.

Die Darstellung der Fig. 9 zeigt eine weitere Ansicht des Gehäuses 10 der Fig. 1 von schräg oben, wobei im Vergleich zu Fig. 1 ein anderer Blickwinkel gewählt wurde. Gut zu erkennen sind die Grundplatte 20 und die Seitenwände 12, 14, 16, 18, in denen jeweils sieben entfernbare Bereiche 32 vorgesehen sind. An jeder Ecke des Gehäuses 10 ist zwischen den jeweils aneinander angrenzenden Flanschen 22, 24, 26, 28 die jeweilige Ausnehmung 30 zum Aufnehmen jeweils einer Nivellierschraube 80 gebildet. Wie zu erkennen ist, überlappt dabei der Flansch 22 an der Seitenwand 12 abschnittsweise im Bereich der jeweiligen Ecke die Flansche 24, 28 und der Flansch 26 an der Seitenwand 16 überlappt abschnittsweise im Bereich der jeweiligen Ecke die Flansche 24, 28. Die Seitenwände 12, 16 sind an ihren beiden Seitenkanten mit jeweils einer rechtwinklig abgebogenen Lasche 56 versehen, die jeweils mit einer Ausprägung 54 versehen ist, siehe Fig. 5, Fig. 11. Die Laschen 56 werden vor dem Hochklappen der Seitenwände 12, 16 relativ zur Grundplatte 20 rechtwinklig zu der jeweiligen Seitenwand 12, 16 abgewinkelt. Vor dem Hochklappen der Seitenwände 12, 16 werden dann noch die Seitenwände 14, 18 mit den bereits rechtwinklig abgebogenen Flanschen 24, 28 in die in Fig. 9 dargestellte Lage gebracht. Anschließend werden die Seitenwände 12, 16, mit den ebenfalls bereits rechtwinklig abgebogenen Flanschen 22, 26 in die in Fig. 9 dargestellte Endlage gebracht. Beim Hochklappen der Seitenwände 12, 16 greifen die Laschen 56, siehe auch Fig. 10, die die vergrößerte Einzelheit X der Fig. 9 darstellt, hinter Federzungen 86, die beim Herstellen der Ausstanzungen 52 in den Seitenwänden 14, 18 gebildet wurden, siehe auch Fig. 5, Fig. 11. Sobald die Seitenwände 12, 16 ihre rechtwinklige Lage zur Grundplatte 20 erreicht haben, schnappen die Ausprägungen 54 in die Ausnehmungen 52 ein, siehe Fig. 11, die die vergrößerte Einzelheit XI der Fig. 9 darstellt, und halten dadurch die Seitenwände 12, 16 in der exakt vorgegebenen Lage zu den Seitenwänden 14, 18 und der Grundplatte 20. Dadurch werden aber auch die Flansche 22, 24, 26, 28 relativ zueinander in einer exakt definierten Lage gehalten. Anhand der Fig. 11 ist zu erkennen, dass nach dem Einrasten der Ausprägung 54 in die Ausnehmung 52 zwischen den Flanschen 24, 26 die Ausnehmung 30 zum Aufnehmen der Nivellierschraube 80 gebildet ist. Der Flansch 26 kann sich in der Darstellung der Fig. 11 dabei nicht im Uhrzeigersinn von dem Flansch 24 weg bewegen, da die Ausprägung 54 an der Kante der Ausnehmung 52 anliegt. Der Flansch 26 kann in der Darstellung der Fig. 11 aber auch nicht gegen den Uhrzeigersinn in Richtung auf den Flansch 24 zu bewegt werden, da die Seitenwand 16 an der in Fig. 11 verdeckten Seitenkante des Flansches 24 anliegt und auch die Vorderkante der Lasche 56 an der Verbindung der Federzunge 86 mit der Seitenwand 18 anstößt. Sobald die Ausprägung 54 somit formschlüssig in die Ausnehmung 52 eingerastet ist, ist damit Form und Größe der Ausnehmung 30 exakt definiert und diese Ausnehmung 30 ist damit exakt genug ausgeformt, um die jeweilige Nivellierschraube 80 mit ausreichender Genauigkeit aufzunehmen.

Die Darstellung der Fig. 12 zeigt noch die vergrößerte Einzelheit XII aus Fig. 9. Gut zu erkennen sind die ausgestellten Laschen 74, 76, siehe auch Fig. 5, angrenzend an die länglichen Ausnehmungen 58, 60, die die entfernbaren Bereiche in der Seitenwand 18 definieren.

Die Darstellung der Fig. 13 zeigt eine Ansicht der Unterflurgerätedose 52 von schräg oben, noch bevor die Nivellierschraube 80 in die Ausnehmung 30 am Gehäuse 10 eingeschraubt wird. In der Darstellung der Fig. 13 ist der Deckel 82 noch nicht in die entsprechende Ausnehmung am Oberteil 78 eingesetzt, so dass die Nivellierschraube 80 von oben her durch das Oberteil 78 hindurch gesteckt und von oben her in die Ausnehmung 30 eingedreht werden kann.

Fig. 14 zeigt die vergrößerte Einzelheit XIV der Fig. 13. Gut zu erkennen ist die zentrale Ausnehmung im Deckel 82, durch die die Kreuzschlitzvertiefung im Kopf der Nivellierschraube 80 erreicht werden kann. Die zentrale Öffnung im Deckel 82 ist dabei kleiner als der Außendurchmesser des Kopfes der Nivellierschraube 80. Nach dem Einsetzen des Deckels 82 in das Oberteil 78 kann sich der Kopf der Nivellierschraube 80 somit gegen die Unterseite des Deckels 82 abstützen und mittels einer Drehung der Nivellierschraube 80 kann ein Abstand zwischen Gehäuse 10 und Oberteil 78 eingestellt werden. Die Öffnung im Deckel 82 ist dabei groß genug, dass mit einem handelsüblichen Kreuzschlitzschraubendreher der Kreuzschlitz im Kopf der Nivellierschraube 80 erreicht werden kann.

Der Deckel 82 ist mittels eines Bajonettverschlusses am Oberteil 78 verrastbar, wobei hierzu am Deckel 82 insgesamt drei Rastnasen 88 vorgesehen ist, die in entsprechende Öffnungen 90 und sich daran anschließende Führungsbahnen im Oberteil 78 eingreifen können. In der Darstellung der Fig. 14 sind lediglich zwei der Rastnasen 88 zu erkennen. Die Öffnung im Deckel 82 ist mit vier jeweils um 90° voneinander beabstandeten Ausbuchtungen versehen, so dass der Deckel 82 ebenfalls mit einem handelsüblichen, großen Kreuzschlitzschraubendreher erfasst und relativ zum Oberteil 78 gedreht werden kann.

Wie bereits erläutert wurde, kann der Deckel 82 nach dem Umgießen der Unterflurgerätedose 52 mit Estrich entfernt werden, um dadurch das Oberteil 78 vom Gehäuse 10 zu entkoppeln.

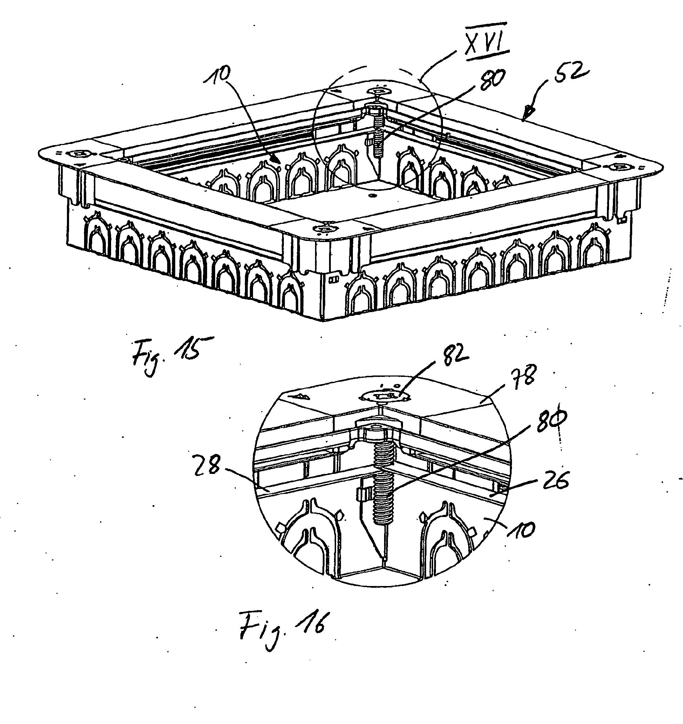

Die Darstellung der Fig. 15 zeigt die Unterflurgerätedose 52 in einer Ansicht von schräg oben nach dem Einsetzen der Nivellierschraube 80 in das Gehäuse 10. In der Darstellung der Fig. 16, die die Einzelheit XVI der Fig. 15 vergrößert darstellt, ist zu erkennen, dass die Nivellierschraube 80 mit ihrem Gewinde an dem Flansch 26 und dem Flansch 28 abschnittsweise angreift, so dass das Oberteil 78 über die Nivellierschraube 80 im Abstand zum Gehäuse 10 gehalten wird. Der Eingriff der Nivellierschraube 80 an dem Gehäuse 10 ist dabei so stark belastbar, dass, beispielsweise während der Bauarbeiten, das Oberteil 78 problemlos betreten werden kann, ohne dass Beschädigungen der Unterflurgerätedose 52 oder speziell des Gehäuses 10 zu befürchten sind.

Wie bereits erläutert wurde, sind in der Darstellung der Fig. 16, in der der Deckel 82 in das Oberteil 78 eingesetzt wurde, das Oberteil 78 und das Gehäuse 10 in ihrer Lage relativ zueinander veränderbar, wenn die Nivellierschraube 80 gedreht wird.

Insgesamt wird durch die Erfindung ein stark vereinfachter Aufbau eines Gehäuses 10 bereitgestellt, speziell eines Blechgehäuses für Unterflurgerätedosen für Elektroinstallationen, indem bei der Herstellung des Gehäuses 10 selbst ohne weitere Bearbeitungsschritte eine stabile und in ihren Abmessungen präzise definierte Aufnahme für einen Gewindebolzen, speziell die Nivellierschrauben 80, geschaffen wird.

## Patentansprüche

1. Gehäuse aus wenigstens einem plattenartigen Zuschnitt, insbesondere aus Blech und insbesondere für Elektroinstallationen, mit wenigstens einer mittels einer Ausnehmung (30) in der Gehäusewand gebildeten Aufnahme für einen Gewindebolzen, **dadurch gekennzeichnet, dass** die Ausnehmung (30) mittels wenigstens zwei aneinander angrenzenden plattenartigen Gehäusewandabschnitten gebildet ist und dass eine Berandung der Ausnehmung (30) abschnittsweise durch einen Rand eines ersten Gehäusewandabschnitts und abschnittsweise durch einen Rand eines zweiten Gehäusewandabschnitts gebildet ist.

2. Gehäuse nach Anspruch 1, **dadurch gekennzeichnet, dass** ein Gewindegang der Aufnahme (30) lediglich durch einander gegenüberliegende Teilabschnitte (34, 36) der Berandung der Ausnehmung (30) am ersten und am zweiten Gehäusewandabschnitt gebildet ist und dass außerhalb dieser Teilabschnitte (34, 36) liegende Teilabschnitte (38, 40, 42, 44) der Berandung der Ausnehmung (30) außerhalb eines Außendurchmessers eines Gewindes der Aufnahme liegen.

3. Gehäuse nach Anspruch 1 oder 2, **dadurch gekennzeichnet, dass** die einander gegenüberliegenden Teilabschnitte (34, 36) jeweils etwa viertelkreisförmig ausgebildet sind.

4. Gehäuse nach einem der vorstehenden Ansprüche, **dadurch gekennzeichnet, dass** zwischen den gegenüberliegenden Teilabschnitten (34, 36) ein Höhenversatz von wenigstens der halben Gewindesteigung vorgesehen ist.

5. Gehäuse nach wenigstens einem der vorstehenden Ansprüche, **dadurch gekennzeichnet, dass** sich der erste und der zweite Gehäusewandabschnitt angrenzend an die Ausnehmung (30) teilweise überlappen.

6. Gehäuse nach wenigstens einem der vorstehenden Ansprüche, **dadurch gekennzeichnet, dass** der Gewindebolzen einen Gewindegang mit sägezahnartigem Querschnitt aufweist, wobei im Querschnitt durch den Bereich, in dem der Gewindebolzen sich auf dem Rand der Ausnehmung (30) abstützt, gesehen, eine auf dem Rand aufliegende Flanke (82) des Gewindegangs etwa parallel zu einer Oberfläche der Gehäusewandabschnitte angrenzend an die Ausnehmung (30) angeordnet ist.

7. Gehäuse nach wenigstens einem der vorstehenden Ansprüche, **dadurch gekennzeichnet, dass** das Gehäuse (10) wenigstens zwei Seitenwände (12, 14, 16, 18) und von den Seitenwänden (12, 14, 16, 18) senkrecht abragende Flansche (22, 24, 26, 28) aufweist, wobei die Ausnehmung (30) in einem Eckbereich vorgesehen ist, in dem zwei Flansche (22, 24, 26, 28) aneinander angrenzen.

8. Gehäuse nach Anspruch 7, **dadurch gekennzeichnet, dass** das Gehäuse (10) eine rechteckige Grundform mit einer Grundplatte (20) und vier Seitenwänden (12, 14, 16, 18) aufweist, wobei jede Seitenwand (12, 14, 16, 18) gegenüberliegend der Grundplatte (20) jeweils einen parallel zur Grundplatte (20) abragenden Flansch (22, 24, 26, 28) aufweist und wobei in den vier Eckbereichen zwischen den Flanschen (22, 24, 26, 28) jeweils eine Ausnehmung (30) zur Bildung einer Aufnahme für einen Gewindebolzen gebildet ist.

9. Gehäuse nach einem der vorstehenden Ansprüche, **dadurch gekennzeichnet, dass** das Gehäuse (10) aus einem einstückigen, gebogenen Blechplatinenzuschnitt (46) gebildet ist.

10. Gehäuse, insbesondere nach einem der vorstehenden Ansprüche, wobei in wenigstens einer Seitenwand (12, 14, 16, 18) wenigstens ein entfernbarer Bereich (32) zum wahlweisen Herstellen einer Kabeteinführungsöffnung vorgesehen ist, wobei wenigstens ein Steg (62, 70) das Seitenwandmaterial und den entfernbaren Bereich (32) verbindet, **dadurch gekennzeichnet, dass** eine den entfernbaren Bereich (32) umgebende Kontur im Seitenwandmaterial wenigstens eine sich von dem entfernbaren Bereich (32) weg erstreckende Ausbuchtung (64) aufweist, in der der Steg (62, 70) wenigstens abschnittsweise angeordnet ist.

11. Gehäuse nach Anspruch 10, **dadurch gekennzeichnet, dass** eine den entfernbaren Bereich (32) umgebende Kontur domartig verläuft.

12. Gehäuse nach Anspruch 10 oder 11, **dadurch gekennzeichnet, dass** eine Begrenzung der Ausbuchtung und der darin angeordnete Steg (62, 70) so voneinander beabstandet sind, um den Steg (62, 70) mit einem Seitenschneider oder dergleichen durchtrennen zu können.

13. Gehäuse nach einem der Ansprüche 10 bis 12, **dadurch gekennzeichnet, dass** ein zweiter, entfernbarer Bereich einschließlich einer Ausbuchtung der umgebenden Kontur zur Anordnung eines Stegs (70) innerhalb eines ersten, größeren entfernbaren Bereichs angeordnet ist.

14. Gehäuse nach einem der Ansprüche 10 bis 13, **dadurch gekennzeichnet, dass** im Seitenwandabschnitt unmittelbar angrenzend an die den entfernbaren Bereich (32) umgebende Kontur aus einer Ebene des Seitenwandmaterials ausgestellte Laschen (74, 76) vorgesehen sind.

15. Verfahren zum Herstellen von Gehäusen, insbesondere für Elektroinstallationen, bei dem zunächst flache Zuschnitte in Form von Platinen (46), insbesondere aus Blech, hergestellt werden und abschnittsweise um Kanten zu Seitenwänden (12, 14, 16, 18) und/oder Flanschen (22, 24, 26, 28) hochgeklappt und zur Gehäuseendform gebracht werden, wobei mindestens zwei Seitenwände (12, 14, 16, 18) und/oder Flansche (22, 24, 26, 28) am jeweiligen Rand in Gegenüberlage gebracht oder wenigstens abschnittsweise überlappt werden, **dadurch gekennzeichnet, dass** zwischen den Rändern eine Ausnehmung (30) zur Bildung einer Aufnahme für einen Gewindebolzen hergestellt wird.

## Claims

1. A housing composed of at least one panel-type blank, in particular made of sheet metal, and in particular for electric installations, having at least one seat for a threaded bolt formed by means of a recess (30) in a housing wall, **characterized in that** the recess (30) is formed by means of at least two adjacent plate-type housing wall sections, and **in that** a boundary of the recess (30) is formed sectionally by an edge of a first housing wall section and sectionally by an edge of a second housing wall section.

2. The housing according to claim 1, **characterized in that** a thread pitch of the recess (30) is formed simply by mutually opposed partial sections (34, 36) of the boundary of the recess (30) on the first and on the second housing wall section, and **in that** partial sections (38, 40, 42, 44) of the boundary of the recess (30) located beyond said partial sections (34, 36) are located beyond an outer diameter of a thread of the recess.

3. The housing according to claim 1 or 2, **characterized in that** the mutually opposed partial sections (34, 36) each have an approximate quadrant shape.

4. The housing according to any of the preceding claims, **characterized in that** between the opposed partial sections (34, 36) an offset in height of at least half of the thread pitch is provided.

5. The housing according to at least one of the preceding claims, **characterized in that** the first and the second housing wall section partially overlap adjacent to the recess (30).

6. The housing according to at least one of the preceding claims, **characterized in that** the threaded bolt has a thread pitch with serrated cross-section, wherein viewed in cross-section through the region where the threaded bolt abuts on the edge of the recess (30), a flank (82) of the thread pitch bearing on the edge is arranged approximately in parallel to a surface of the housing wall sections adjacent to the recess (30).

7. The housing according to at least one of the preceding claims, **characterized in that** the housing (10) has at least two side walls (12, 14, 16, 18) and flanges (22, 24, 26, 28) projecting perpendicularly from said side walls (12, 14, 16, 18), wherein the recess (30) is provided in a corner region where two flanges (22, 24, 26, 28) border on each other.

8. The housing according to claim 7, **characterized in that** the housing (10) has a rectangular basic design including a base plate (20) and four side walls (12, 14, 16, 18), wherein each side wall (12, 14, 16, 18) has opposed to the base plate (20) a respective flange (22, 24, 26, 28) projecting in parallel to the base plate (20), and wherein in the four corner regions between the flanges (22, 24, 26, 28) a respective recess (30) is formed to provide a seat for a threaded bolt.

9. The housing according to any of the preceding claims, **characterized in that** the housing (10) is made of a one-piece, bent sheet metal blank cut (46).

10. The housing, in particular according to any of the preceding claims, wherein in at least one side wall (12, 14, 16, 18) at least one removable region (32) for optional preparation of a cable insertion hole is provided, wherein at least one web (62, 70) is to connect the side wall material and the removable region (32), **characterized in that** a contour surrounding the removable region (32) in the side wall material has at least one bulge (64) extending away from the removable region (32), in which the web (62, 70) is disposed at least sectionally.

11. The housing according to claim 10, **characterized in that** a contour surrounding the removable region (32) extends in a dome-type layout.

12. The housing according to claim 10 or 11, **characterized in that** a delimitation of the bulge and the web (62, 70) arranged therein are spaced in such a manner that the web (62, 70) can be cut using a side cutter or the like.

13. The housing according to any of the claims 10 to 12, **characterized in that** a second removable region including a bulge of the surrounding contour for arrangement of a web (70) is disposed within a first, larger removable region.

14. The housing according to any of the claims 10 to 13, **characterized in that** in the side wall section immediately adjacent to the contour surrounding the removable region (32) are provided lugs (74, 76) sticking out from a plane of the side wall material.

15. A method for manufacturing housings, in particular for electric installations, wherein initially flat cuts in the form of blanks (46), in particular made of sheet metal, are produced, and are sectionally folded up around edges to be side walls (12, 14, 16, 18) and/or flanges (22, 24, 26, 28) and to make a final housing shape, wherein at least two side walls (12, 14, 16, 18) and/or flanges (22, 24, 26, 28) at the respective edge are arranged in opposed position or at least sectionally overlapping, **characterized in that** a recess (30) is produced between the edges to form a seat for a threaded bolt.

## Revendications

1. Boîtier constitué d'au moins un flan de type plaque, en particulier en tôle et en particulier pour des installations électriques, comprenant au moins un logement pour un boulon fileté, lequel logement est formé au moyen d'un évidement (30) dans la paroi de boîtier, **caractérisé en ce que** l'évidement (30) est formé au moyen d'au moins deux sections de paroi de boîtier de type plaque adjacentes l'une à l'autre, et **en ce qu'**une bordure de l'évidement (30) est formée, par sections, par un bord d'une première section de paroi de boîtier et, par sections, par un bord d'une deuxième section de paroi de boîtier.

2. Boîtier selon la revendication 1, **caractérisé en ce qu'**un pas de filet de l'évidement (30) est formé seulement par des sections partielles (34, 36), en regard l'une de l'autre, de la bordure de l'évidement (30), sur la première et sur la deuxième section de paroi de boîtier, et **en ce que** des sections partielles (38, 40, 42, 44) de la bordure de l'évidement (30) situées en dehors de ces sections partielles (34, 36) se situent à l'extérieur d'un diamètre extérieur d'un filetage du logement.

3. Boîtier selon la revendication 1 ou 2, **caractérisé en ce que** les sections partielles (34, 36) en regard l'une de l'autre sont respectivement réalisées approximativement en forme de quart de cercle.

4. Boîtier selon l'une quelconque des revendications précédentes, **caractérisé en ce qu'**un décalage en hauteur d'au moins la moitié du pas de filet est prévu entre les sections partielles (34, 36) en regard.

5. Boîtier selon au moins l'une quelconque des revendications précédentes, **caractérisé en ce que** la première et la deuxième section de paroi de boîtier se chevauchent partiellement à proximité de l'évidement (30).

6. Boîtier selon au moins l'une quelconque des revendications précédentes, **caractérisé en ce que** le boulon fileté présente un pas de filet présentant une section transversale en dents de scie et, vu en section transversale à travers la région dans laquelle le boulon fileté s'appuie contre le bord de l'évidement (30), un flanc (82) du pas de filet reposant sur le bord étant disposé approximativement parallèlement à une surface des sections de paroi de boîtier à proximité de l'évidement (30).

7. Boîtier selon au moins l'une quelconque des revendications précédentes, **caractérisé en ce que** le boîtier (10) comprend au moins deux parois latérales (12, 14, 16, 18) et des rebords (22, 24, 26, 28) faisant saillie perpendiculairement à partir des parois latérales (12, 14, 16, 18), l'évidement (30) étant prévu dans une région de coin dans laquelle deux rebords (22, 24, 26, 28) sont adjacents l'un à l'autre.

8. Boîtier selon la revendication 7, **caractérisé en ce que** le boîtier (10) présente une forme de base rectangulaire avec une plaque de base (20) et quatre parois latérales (12, 14, 16, 18), chaque paroi latérale (12, 14, 16, 18) comprenant, en vis-à-vis de la plaque de base (20), un rebord (22, 24, 26, 28) respectif faisant saillie parallèlement à la plaque de base (20), et un évidement (30) respectif pour la formation d'un logement pour un boulon fileté étant formé dans les quatre régions de coin entre les rebords (22, 24, 26, 28).

9. Boîtier selon l'une quelconque des revendications précédentes, **caractérisé en ce que** le boîtier (10) est formé à partir d'un flan de platine de tôle (46) courbé et monobloc.

10. Boîtier, en particulier selon l'une quelconque des revendications précédentes, au moins une région pouvant être enlevée (32) pour fabriquer de manière sélective une ouverture d'insertion de câble étant prévue dans au moins une paroi latérale (12, 14, 16, 18), au moins un nervure (62, 70) reliant le matériau de paroi latérale et la région pouvant être enlevée (32), **caractérisé en ce qu'**un contour, entourant la région pouvant être enlevée (32), dans le matériau de paroi latérale comprend au moins un renflement (64) s'étendant à l'écart de la région pouvant être enlevée (32), dans lequel renflement est disposée, au moins par sections, la nervure (62, 70).

11. Boîtier selon la revendication 10, **caractérisé en ce qu'**un contour entourant la région pouvant être enlevée (32) s'étend en forme de dôme.

12. Boîtier selon la revendication 10 ou 11, **caractérisé en ce qu'**une limitation du renflement et la nervure (62, 70) disposée dans celui-ci sont espacées l'une de l'autre afin de pouvoir sectionner la nervure (62, 70) à l'aide d'une pince coupante diagonale ou similaire.

13. Boîtier selon l'une quelconque des revendications 10 à 12, **caractérisé en ce qu'**une deuxième région pouvant être enlevée, y compris un renflement du contour qui l'entoure, est disposée à l'intérieur d'une première région pouvant être enlevée plus grande, pour la disposition d'une nervure (70).

14. Boîtier selon l'une quelconque des revendications 10 à 13, **caractérisé en ce que** des languettes (74, 76) saillant hors d'un plan du matériau de paroi latérale sont prévues dans la section de paroi latérale à proximité immédiate du contour entourant la région pouvant être enlevée (32).

15. Procédé de fabrication de boîtiers, en particulier pour des installations électriques, dans lequel des flans plats sont tout d'abord fabriqués sous forme de platines (46), en particulier en tôle, et sont repliés autour d'arêtes pour former des parois latérales (12, 14, 16, 18) et/ou des rebords (22, 24, 26, 28) et sont amenés à prendre la forme finale de boîtier, au moins deux parois latérales (12, 14, 16, 18) et/ou des rebords (22, 24, 26, 28) étant amenés en regard ou étant superposés au moins par sections au niveau du bord respectif, **caractérisé en ce qu'**un évidement (30) pour la formation d'un logement pour un boulon fileté est fabriqué entre les bords.
